# EUROPEAN PATENT SPECIFICATION

(11) **EP 3 967 473 B1**
(45) Date of publication and mention of the grant of the patent: **18.11.2026**
(21) Application number: 21199427.2
(22) Date of filing: 21.09.2016
(51) Int. Cl.: B29C 59/04, B32B 27/08, B32B 27/30, B32B 37/20, B32B 38/00, B32B 38/18, E04F 15/10, B32B 38/06, B29L 7/00, B29L 9/00

(54) **LONG DECORATIVE MATERIAL WITH EMBOSSING IN REGISTER WITH PATTERN AND ROLLING METHOD AND DEVICE THEREFOR**
LANGES DEKORMATERIAL MIT REGISTERPRÄGUNG MIT MUSTER SOWIE WALZVERFAHREN UND VORRICHTUNG DAFÜR
LONGUE MATIÈRE DÉCORATIVE À MOTIFS DE REPÉRAGE DU GAUFRAGE ET PROCÉDÉ DE LAMINAGE ET DISPOSITIF À CET EFFET

(30) Priority: 15.06.2016 CN 201610415455
(43) Date of publication of application: 16.03.2022
(62) Document number(s) of the earlier application(s) in accordance with Art. 76 EPC: 16189896.0 / 3 257 654
(73) Proprietor: Unilin, BV, 8710 Wielsbeke (BE)
(72) Inventor: ZHU, Caiqin, Huzhou, 313300 (CN); WANG, Yibing, Huzhou, 313300 (CN); TANG, Wenjin, Huzhou, 313300 (CN)
(74) Representative: Unilin Technologies

(56) References cited:
- WO-A1-2016/050696
- WO-A1-2016/184581
- DE-B3- 102006 019 591
- JP-A- H0 839 669
- JP-A- H06 215 371
- JP-A- H06 297 570
- JP-A- H07 276 497
- US-A1- 2008 122 129
- US-B1- 6 416 607

## Description

### BACKGROUND OF THE INVENTION

### Field of the Invention

The present invention relates to a polyvinyl chloride (PVC) decorative material, and more particularly, to a PVC decorative material where an embossing on an upper transparent plastic layer is in register with a pattern on a lower printed plastic layer and the length is continuous, and a rolling method and a device for rolling the PVC decorative material. The decorative material may also be other thermoplastic plastic having stretchability.

### Description of the Related Art

Polyvinyl chloride (PVC) decorative material is a new and light floor decorative material that is very popular in the world, especially widely popular in Europe, America, and Japan and Korea in Asia. At present, the material has also been accepted by large and medium-sized cities in domestic and is increasingly applied in families, hospitals, schools, office buildings, factories, supermarkets, airport halls, stadiums, and other sites.

The existing PVC decorative material is usually formed by overlaying a transparent plastic layer on the surface (equivalent to a transparent layer, a protective layer, and a wear-resistant layer), an image plastic layer with a pattern in the middle (equivalent to a printing layer, a decorative layer, and a colored film layer), and a base layer in the bottom (equivalent to a bottom layer and a bottom plate). The PVC decorative material in such a structure may either be directly paved on the floor for use or bonded on the surface of a foam board, a laminated board, or a wood-plastic board to form a composite board. With the continuous development of the market, the decorative requirements of the PVC decorative material are increasingly improved. Users not only expect to process an embossing on the surface of the transparent plastic layer to increase a three-dimensional sense of the flooring, but also expect to make the embossing on the transparent plastic layer in register with the pattern on the image plastic layer (such as a wood grain, a stone grain, or a fabric grain), to make the embossing become the wood grain, stone grain, or fabric grain, thereby further improving the sense of reality and the three-dimensional sense of the PVC decorative material and increasing the simulation effect of the flooring.

A lamination method is a method adopted currently for registering the embossing of the transparent plastic layer with the pattern of the image plastic layer. To make the embossed pattern (the embossing for short) on the surface transparent plastic layer in register with the pattern (such as the wood grain, stone grain, or fabric grain) on the image plastic layer (i.e., the plastic layer printed with continuous unit patterns), the transparent plastic layer, the image plastic layer, and the base layer are firstly tailored into rectangle blocks with the same length, wherein the length shall be the length of one unit pattern on the image plastic layer, and then the transparent plastic layer, the image plastic layer, and the base layer are overlaid together in sequence and are placed on a lower pressing plate. The raised pattern on an upper pressing plate is aligned with the corresponding pattern on the image plastic layer through a positioning device, and finally the upper pressing plate is pressed on the transparent plastic layer, heating and pressing. Thus, the embossing pressed on the transparent plastic layer is in register with the pattern of the image plastic layer. The traditional lamination method has great defects: one pressing plate can only press two pieces of pros and cons PVC decorative materials at a time; during mass production, a large number of the pressing plates are required in case of increasing the yield, which leads to high costs and high energy consumption; the pattern on the pressing plate is aligned with the pattern on the image plastic layer, which requires manual operation, resulting in heavy workload and low accuracy rate and causing low production efficiency. Moreover, the length of each piece of the PVC decorative material is fixed, and the patterns of the manufactured flooring are repetitive, which does not comply with the property of natural materials.

US Patent No. 5122212 (filing date is Oct. 27, 1989 and application no. is 07/428262 ) discloses a novel improved process for registering the pattern. According to the process, a bottom plate, a decorative layer (transfer printing), and a wear-resistant layer achieve a pattern register effect through a register roller, and during rolling, the pattern on the decorative layer should correspond to the pattern designed on the register roller to press a pattern register effect. The technical solution tries to use a rolling process to improve the traditional lamination method above, so as to register the embossing on the wear-resistant layer with the pattern on the decorative layer. Unfortunately, the technical solution of the patent cannot be applied in practice all the time due to a fatal defect. The fatal defect is that: when the bottom plate, the decorative layer, and the wear-resistant layer are embossed by the register roller synchronously, an longitudinal extension of the decorative layer is unavoidable due to a rolling force and a rolling temperature (over 85 °C), while the grains on the register roller for the embossing will not extend, which will certainly lead to a coincidence deviation between the pattern on the register roller and the pattern on the decorative layer and affect a three-dimensional effect and a simulation effect of the PVC decorative material, so that the product quality cannot be guaranteed. Because the register roller tightly extrudes the decorative layer while embossing, a relative position between the register roller and the decorative layer is tightly pressed by the register roller, which can neither be implemented through adjusting the feeding speed of the printing layer, nor implemented through adjusting the rotation speed of the register roller.

After years of exploration, on May 28, 2003, Chinese Patent Publication No. CN1420025A (application no. is 02149569.6 ) discloses a Long Floor Decorative Material with Printed Pattern in Register with Embossed Pattern. The patent technology is intended to solve the technical problem that "a printed pattern of a printing layer cannot be in register with an embossed pattern due to transformation (see paragraph 2 in page 5 of the Description)", and this invention "directly uses a glass fiber film made of waterproof stiffener to minimize the transformation of the printed pattern" (see paragraph 2 in page 5 of the Description). Although the method solves the above problem to some degree, the glass fiber film made of waterproof stiffener needs to be added, which increases the process costs and the material costs. The reason why this invention solves the problem to some degree is that once a register deviation exists between the printed pattern of the printing layer and the embossed pattern on the embossing roller along a longitudinal direction during rolling, the patent technology cannot correct the deviation through dynamic adjustment during rolling. Because an embossing roll machine tightly presses the printing layer while embossing, a relative position between the embossing roller and the printing layer cannot be implemented through adjusting the feeding speed of the printing layer and/or adjusting the rotation speed of the embossing roller (having the same defect with that of the US Patent No. 5122212 above).

For decades, those skilled in the art have been keeping exploring an effective way to implement coincidence of the embossing of the transparent plastic layer with the pattern of the image plastic layer, but no breakthrough is achieved. Until now, the coincidence of embossing can only be implemented using the oldest lamination method above in the art.

JP H08 39669 A discloses a method for adjusting embossing register in pattern synchronized embossing. The method uses a roll-shaped transfer sheet and a transparent plastic sheet to transfer a printed pattern and simultaneously emboss in sync with the pattern, by enabling a register mark detector to accurately detect pattern register marks and embossed register marks even when the dimensions of the pattern-synchronized embossing sheet change and cause variation. The tension of the transfer sheet is adjusted in case of any misregistration between printed pattern and embossing.

### BRIEF SUMMARY OF THE INVENTION

An objective of the present invention is to provide a rolling method for a long decorative material with an embossing in register with a pattern, which can implement register between the embossing on a transparent plastic layer and the pattern on a printed plastic layer and have high production efficiency, low cost and less energy consumption.

Another problem to be solved by the present invention is to provide a rolling device for a long decorative material with an embossing in register with a pattern, which can be used to process a long decorative material with the embossing in register with the pattern and have high production efficiency, low cost and less energy consumption.

One more problem to be solved by the present invention is to process the long decorative material with the embossing in register with the pattern using the foregoing method and device, which has low cost, good simulation effect and un-limited cutting length and complies with the property of a natural material.

To fulfill the foregoing objective, the present invention adopts the technical solution defined in the claims.

A rolling method for a long decorative material with an embossing in register with a pattern comprises a feeding step of feeding a layered raw material of a long decorative material to be rolled into oppositely rolling rollers, the layered raw material comprising a transparent plastic layer and a printed plastic layer printed with continuous unit patterns; and a rolling step of hot rolling an embossing on the transparent plastic layer. In the feeding step, the transparent plastic layer is located at one side of the printed plastic layer where the continuous unit patterns are printed, the transparent plastic layer is adjacent to an embossing roller of the oppositely rolling rollers, and an embossed pattern disposed around an outer circle of the embossing roller corresponds to a pattern of one unit pattern on the printed plastic layer. In the rolling step, a longitudinal deviation of the embossing is adjusted. An adjusting step comprises detecting the longitudinal deviation between the embossed pattern on the embossing roller and the corresponding pattern on the printed plastic layer during rolling and adjusting a feeding tension of the printed plastic layer according to the longitudinal deviation, so as to adjust a stretching length of the printed plastic layer before rolling, so that the longitudinal deviation in subsequent rolling is reduced until the embossed pattern is longitudinally in register with the corresponding pattern on the printed plastic layer during rolling, and the embossing hot-rolled on the transparent plastic layer is longitudinally in register with the corresponding pattern on the printed plastic layer.

In one embodiment of the invention, the adjusting step may comprise detecting a position of a preset part on each unit pattern of the printed plastic layer and detecting a position of a corresponding part on the embossing roller corresponding to the preset part at the same time; when the preset part is detected to be ahead of the corresponding part, increase the feeding tension of the printed plastic layer to increase the stretching length of the printed plastic layer before rolling, so as to reduce an ahead value of the preset part in subsequent rolling until a deviation between the preset part and the corresponding part is zero, so that the embossing hot-rolled on the transparent plastic layer is longitudinally in register with the corresponding pattern on the printed plastic layer; and when the preset part is detected to be lagging behind the corresponding part, decrease the feeding tension of the printed plastic layer to decrease the stretching length of the printed plastic layer before rolling, so as to increase a lagged value of the preset part in the subsequent rolling until the deviation between the preset part and the corresponding part is zero, so that the embossing hot-rolled on the transparent plastic layer is longitudinally with the corresponding pattern on the printed plastic layer.

In one embodiment of the invention, a spread length of the embossed pattern disposed around the outer circle of the embossing roller may be 1.01 to 1.5 times of a length a of one unit pattern on the printed plastic layer before stretching; and a heating temperature in the rolling step ranges from 85°C to 250°C.

In one embodiment of the invention, in the rolling step, the longitudinal deviation of the embossing may be measured by a distance difference or a time difference between the detected preset part on each unit pattern of the printed plastic layer and the detected corresponding part on the embossing roller corresponding to the preset part.

In one embodiment of the invention, during the process of adjusting the longitudinal deviation of the embossing in the rolling step, a lateral deviation of the image may be further adjusted. When a lateral deviation is detected to be existing between the pattern on the printed plastic layer and the embossed pattern on the embossing roller, the plastic layer or the embossing roller may be moved along a lateral direction, so that the pattern on the printed plastic layer is in register with the embossed pattern around the outer circle of the embossing roller on the lateral direction.

In an embodiment of the present invention, the layered raw material of the long decorative material to be rolled may further comprise a plastic base layer. The plastic base layer may be delivered to the oppositely rolling rollers simultaneously in the feeding step, and the plastic base layer is located at the other side of the printed plastic layer opposite to the side printed with the continuous unit patterns.

A rolling device for implementing the rolling method for the long decorative material comprises: a first feeding device, a second feeding device, the oppositely rolling rollers including the embossing roller and a backing roller, and a control device for controlling the first feeding device, the second feeding device and the oppositely rolling rollers. The transparent plastic layer enters the oppositely rolling rollers from the first feeding device, and the printed plastic layer enters the oppositely rolling rollers from the second feeding device. The transparent plastic layer is located at the side of the printed plastic layer printed with the continuous unit patterns, and the transparent plastic layer is adjacent to the embossing roller. The rolling device further comprises a detecting device for detecting the longitudinal deviation between the embossed pattern on the embossing roller and the corresponding pattern on the printed plastic layer during rolling, and a tension controller disposed on the second feeding device; when the detecting device detects that the longitudinal deviation appears between the embossed pattern on the embossing roller and the corresponding pattern on the printed plastic layer, the control device controls the tension controller to adjust the tension of the printed plastic layer between the second feeding device and the oppositely rolling rollers according to the longitudinal deviation, so as to adjust the stretching length of the printed plastic layer before rolling, so that the longitudinal deviation in subsequent rolling is reduced until the embossed pattern is in register with the corresponding pattern on the printed plastic layer during rolling, and the embossing hot-rolled on the transparent plastic layer is longitudinally in register with the corresponding pattern on the printed plastic layer.

In one embodiment of the invention, the control device may control a heating temperature to be between 85°C and 250°C through controlling a hot medium flowing into the oppositely rolling rollers, and a spread length of the embossed pattern disposed around the outer circle of the embossing roller may be 1.01 to 1.5 times of the length of one unit pattern on the printed plastic layer before stretching.

In one embodiment of the invention, the detecting device may comprise a first sensor for detecting a position of a preset part in each unit pattern on the printed plastic layer and a second sensor for detecting a position of a corresponding part on the embossing roller corresponding to the preset part, and the control device may use a distance difference or a time difference of signals detected by the two sensors as the longitudinal deviation of the embossing in the rolling step to control the tension of the printed plastic layer between the second feeding device and the oppositely rolling rollers, so as to adjust the stretching length of the printed plastic layer before rolling, so that the longitudinal deviation in subsequent rolling is reduced until the embossed pattern is in register with the corresponding pattern on the printed plastic layer during rolling, and the embossing hot-rolled on the transparent plastic layer is longitudinally in register with the corresponding pattern on the printed plastic layer.

In one embodiment of the invention, the first sensor may be a color mark sensor or an image sensor, and the second sensor (82) may be a position sensor, a displacement sensor, or a rotation speed sensor.

In one embodiment of the invention, a magnetic powder brake may be adopted as the tension controller and may be disposed on a feeding axle of the second feeding device.

In one embodiment of the invention, a lateral rectification device may be further comprised. The lateral rectification device may comprise a third sensor for detecting a lateral deviation of the unit pattern on the printed plastic layer and a lateral transmission gear for making the second feeding device move along a lateral direction, and the control device may control the lateral transmission gear according to the lateral deviation of the unit pattern on the printed plastic layer detected by the third sensor, so as to make the second feeding device move along the lateral direction correspondingly, so that the pattern on the printed plastic layer is in register with the embossed pattern around the outer circle of the embossing roller on the lateral direction.

In one embodiment of the invention, a third feeding device for feeding a plastic base layer in the oppositely rolling rollers may be further comprised. The plastic base layer may be adjacent to the backing roller and may be hot-rolled on the other side of the printed plastic layer opposite to the transparent plastic layer by the embossing roller and the backing roller.

The long decorative material with the embossing in register with the pattern manufactured by the rolling method comprises the transparent plastic layer and the printed plastic layer, wherein the embossing hot-rolled on the transparent plastic layer is in register with the pattern on the printed plastic layer.

In one embodiment of the invention, the long decorative material may further comprise a plastic base layer hot-rolled below the printed plastic layer.

Compared with the prior art, the present invention has the following beneficial effects. The above-mentioned conventional ways of the prior art are broken by employing the foregoing rolling method for the long decorative material with the embossing in register with the pattern. In the rolling step, the feeding tension of the printed plastic layer is adjusted according to the longitudinal deviation between the embossed pattern on the embossing roller and the corresponding pattern on the printed plastic layer, so as to adjust the stretching length of the image plastic layer before rolling, so that the longitudinal deviation in subsequent rolling is reduced until the embossed pattern is in register with the corresponding pattern on the printed plastic layer during rolling, and the embossing hot-rolled on the transparent plastic layer is longitudinally in register with the corresponding pattern on the printed plastic layer. This method can correct the deviation between the embossing and the pattern through the dynamic adjustment during the process of rolling. The processing of registering the embossing on the transparent plastic layer with the pattern on the printed plastic layer is realized through the rolling method for hot rolling the transparent plastic layer and the printed plastic layer, greatly reducing the production costs and the energy losses, which is a major breakthrough for flooring processing.

After one embossing roller is manufactured, the spread length of the embossed pattern on the outer circle thereof is fixed, so that the spread length of the embossed pattern disposed around the outer circle of the embossing roller is 1.01 to 1.5 times of the length of one unit pattern on the printed plastic layer before stretching (for a specific embossing roller, the spread length of the embossed pattern disposed around the outer circle thereof is a certain value between 1.01a and 1.5a), so that the pattern on the stretched printed plastic layer is in register with the embossed pattern on the outer circle of the embossing roller, thereby realizing the embossing on the transparent plastic layer in register with the pattern on the printed plastic layer.

The present invention has further beneficial effects. According to the rolling device for implementing the rolling method for the long decorative material, the second feeding device and the oppositely rolling rollers are improved on the basis of the existing device, wherein the tension controller is additionally disposed on the second feeding device, and the detecting device for detecting the longitudinal deviation between the embossed pattern on the embossing roller and the corresponding pattern on the printed plastic layer during rolling is additionally added. When the printed plastic layer on the second feeding device is mechanically transferred or manually fed to the oppositely rolling rollers, the oppositely rolling rollers will have a tensile force of rolling the printed plastic layer into the oppositely rolling rollers; when the detecting device detects that the longitudinal deviation appears between the embossed pattern on the embossing roller and the corresponding pattern on the printed plastic layer, the control device controls the tension controller to adjust the tension of the printed plastic layer between the second feeding device and the oppositely rolling rollers according to the longitudinal deviation, so as to adjust the stretching length of the printed plastic layer before rolling and adjust the relative position between the oppositely rolling rollers and the printed plastic layer through the change of the stretching length of the printed plastic layer, thereby decreasing the longitudinal deviation during the subsequent rolling until the embossed pattern on the embossing roller is in register with the corresponding pattern on the printed plastic layer during rolling. Thus, the embossing hot-rolled on the transparent plastic layer is longitudinally in register with the corresponding pattern on the printed plastic layer. This device can use the rolling method to implement a processing method of registering the embossing of the transparent plastic layer with the pattern of the printed plastic layer, thereby improving the production efficiency by dozens of times, greatly reducing the production costs and the energy losses, which is a major breakthrough for the flooring processing.

For the long decorative material with the embossing in register with the pattern manufactured by the rolling method, the embossing hot-rolled on the transparent plastic layer is in register with the pattern on the printed plastic layer, thereby enhancing the sense of reality and the three-dimensional sense of the decorative material, which improves the simulation effect of the decorative material and has low production cost in unit area and high production efficiency. Moreover, because the long decorative material is manufactured by the continuous rolling of the oppositely rolling rollers, the length thereof is greater than that of the decorative material processed using the lamination method in the prior art, and the long decorative material is the decorative material having continuous length (including a plurality of continuous unit patterns). Different cutting positions can be set for such a long decorative material decorative material having the continuous length, the cutting lengths are not limited, and the patterns of cut blocks are not repetitive. The flooring plank formed by bonding the blocks on the surface of a foaming board, a laminated board, a plastic base layer, or a wood-plastic board complies with the property of a natural material better.

### BRIEF DESCRIPTION OF THE DRAWINGS

FIG. 1 is a structure diagram of a processing device according to one embodiment of the present invention;
FIG. 2 is a structure diagram of a second feeding device according to one embodiment of the present invention;
Fig 3 is a sectional structural diagram of a long decorative material with an embossing in register with a pattern according to one embodiment of the invention;
FIG. 4 is a structure diagram of unit patterns connected end to end according to one embodiment of the invention;
FIG. 5 is a structure diagram of an embossing roller according to one embodiment of the invention; and
FIG. 6 is a structure diagram of a third feeding device additionally disposed in FIG. 1.

### DETAILED DESCRIPTION OF THE INVENTION

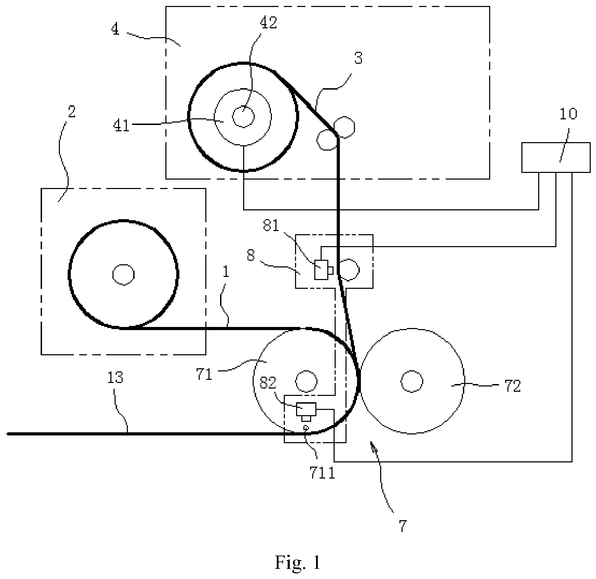

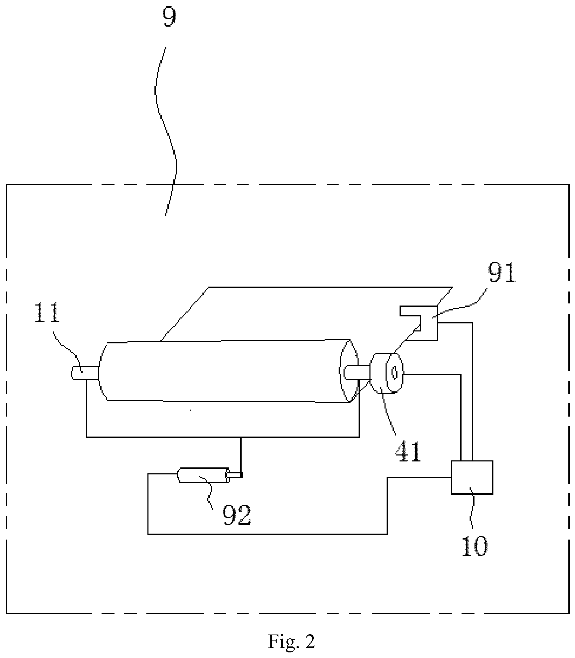

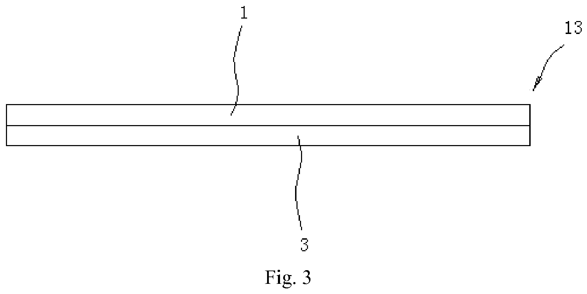

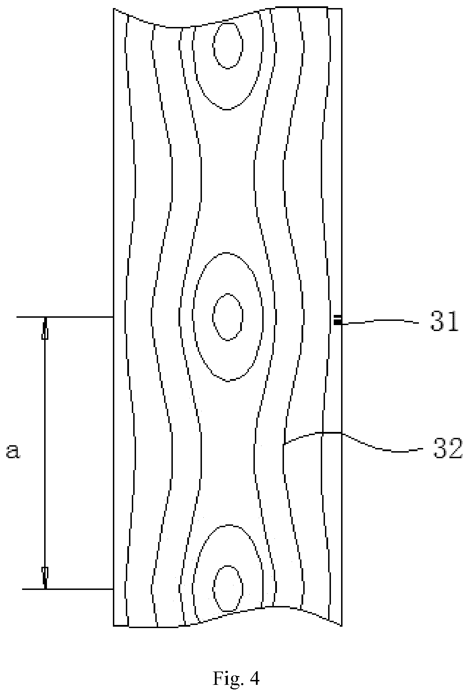

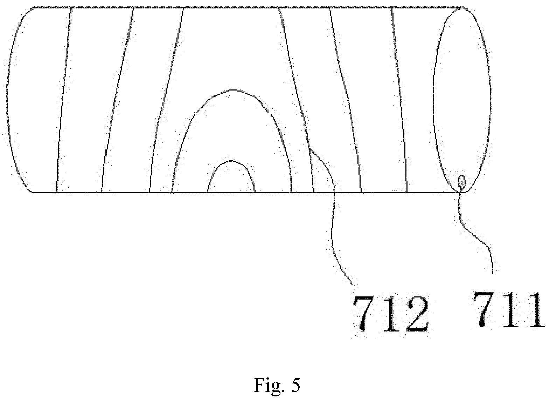

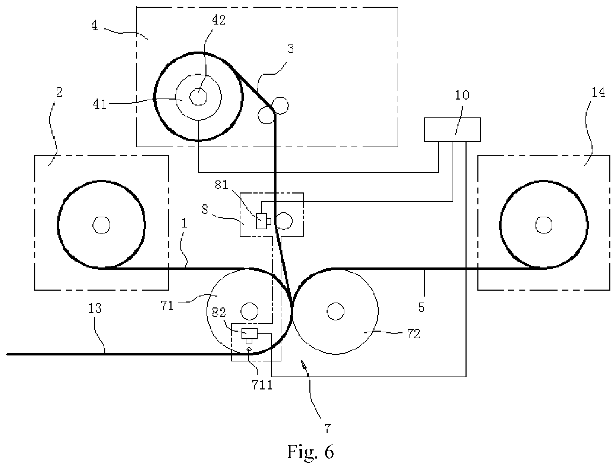

In order to represent the technical solution of the present invention more clearly, the present invention will be explained in details with reference to the accompanying drawings FIG. 1 to FIG. 6 hereinafter. It is to be understood that the detailed embodiments described in the description are only intended to interpret the present invention, rather than to define the protection scope of the present invention.

The present invention relates to a rolling method for a long decorative material with an embossing in register with a pattern, comprising:
a feeding step of feeding a layered raw material of a long decorative material 13 to be rolled into oppositely rolling rollers 7, the layered raw material comprising a transparent plastic layer 1 and a printed plastic layer 3 printed with continuous unit patterns; and
a rolling step of hot rolling an embossing on the transparent plastic layer 1.

In the feeding step, the transparent plastic layer 1 is located at one side of the printed plastic layer 3 where the continuous unit patterns are printed, the transparent plastic layer 1 is adj acent to an embossing roller 71 of the oppositely rolling rollers 7, and an embossed pattern 712 disposed around an outer circle of the embossing roller 71 corresponds to a pattern 32 of one unit pattern on the printed plastic layer 3. Optionally, a spread length of the embossed pattern 712 disposed around the outer circle of the embossing roller 71 is 1.01 to 1.5 times of a length a of one unit pattern on the printed plastic layer 3 before stretching. In a lateral direction, the width of the printed plastic layer 3 changes little after the stretching, and a deviation of the embossing in a width direction is hard to be visually noticed and can be neglected. Optionally, the width of the embossed pattern 712 on the outer circle of the embossing roller 71 is 0.95-1 times of the width of the unit pattern on the printed plastic layer 3 before stretching.

In the rolling step, a longitudinal deviation of the embossing is adjusted. The adjusting step comprises detecting the longitudinal deviation between the embossed pattern 712 on the embossing roller 71 and the corresponding pattern 32 on the printed plastic layer 3 during rolling and adjusting a feeding tension of the printed plastic layer 3 according to the longitudinal deviation, so as to adjust a stretching length of the printed plastic layer 3 before rolling, so that the longitudinal deviation in subsequent rolling is reduced until the embossed pattern 712 is in register with the corresponding pattern 32 on the printed plastic layer 3 during rolling. Thus, the embossing hot-rolled on the transparent plastic layer 1 is longitudinally in register with the corresponding pattern 32 on the printed plastic layer 3.

The longitudinal deviation of the embossing is measured by a distance difference or a time difference between a detected preset part 31 on each unit pattern of the printed plastic layer 3 and a detected corresponding part 711 on the embossing roller 71 corresponding to the preset part 31. Optionally, the adjusting step comprises: detecting the position of the preset part 31 on each unit pattern of the printed plastic layer 3 and detecting the position of the corresponding part 711 on the embossing roller 71 corresponding to the preset part 31 at the same time. When the preset part 31 is detected to be ahead of the corresponding part 711, increase the feeding tension of the printed plastic layer 3 to increase the stretching length of the printed plastic layer 3 before rolling, so as to reduce an ahead value of the preset part 31 in subsequent rolling until the deviation between the preset part 31 and the corresponding part 711 is zero, so that the embossing hot-rolled on the transparent plastic layer 1 is longitudinally in register with the corresponding pattern 32 on the printed plastic layer 3. When the preset part 31 is detected to be lagging behind the corresponding part 711, decrease the feeding tension of the printed plastic layer 3 to decrease the stretching length of the printed plastic layer 3 before rolling, so as to increase a lagged value of the preset part 31 in the subsequent rolling until the deviation between the preset part 31 and the corresponding part 711 is zero, so that the embossing on the transparent plastic layer 1 is longitudinally in register with the corresponding pattern 32 on the printed plastic layer 3. Certainly, the register mentioned herein refers to register in a deviation range hard to be visually noticed, for example, the deviation is 0-2mm and is preferably 0-0.5mm.

Optionally, the control device 10 controls a heating temperature to be between 85°C and 250°C through controlling a hot medium flowing into the oppositely rolling rollers 7.

During the process of adjusting the longitudinal deviation of the embossing in the rolling step, a lateral deviation of the pattern is further adjusted. When a lateral deviation is detected to be existing between the pattern 32 on the printed plastic layer 3 and the embossed pattern 712 on the embossing roller 71, the transparent plastic layer 1 or the embossing roller 71 is moved along a lateral direction, so that the pattern 32 on the printed plastic layer 3 is in register with the embossed pattern 712 around the outer circle of the embossing roller 71 on the lateral direction.

Further, the layered raw material of the long decorative material 13 to be rolled further comprises a plastic base layer 5. The plastic base layer 5 is delivered to the oppositely rolling rollers 7 simultaneously in the feeding step, and the plastic base layer 5 is located at the other side of the printed plastic layer 3 opposite to the side printed with the continuous unit patterns.

A rolling device for implementing the rolling method for the long decorative material 13 comprises: a first feeding device 2, a second feeding device 4, the oppositely rolling rollers 7 including the embossing roller 71 and a backing roller 72, a control device 10 for controlling the first feeding device 2, the second feeding device 4 and the oppositely rolling rollers 7, a detecting device 8 for detecting the longitudinal deviation between an embossed pattern 712 on the embossing roller 71 and the corresponding pattern 32 on the printed plastic layer 3 during rolling, and a tension controller 41 disposed on the second feeding device 4. The transparent plastic layer 1 enters the oppositely rolling rollers 7 from the first feeding device 2, and the printed plastic layer 3 enters the oppositely rolling rollers 7 from the second feeding device 4. The transparent plastic layer 1 is located at one side of the printed plastic layer 3 printed with the continuous unit patterns, and the transparent plastic layer 1 is adjacent to the embossing roller 71. As described in the foregoing rolling method for the long decorative material 13, the embossed pattern 712 disposed around the outer circle of the embossing roller 71 corresponds to the pattern 32 of one unit pattern on the printed plastic layer 3, and optionally, the spread length of the embossed pattern 712 disposed around the outer circle of the embossing roller 71 is 1.01 to 1.5 times of the length a of one unit pattern on the printed plastic layer 3 before stretching. When the printed plastic layer 3 on the second feeding device 4 is mechanically transferred or manually fed to the oppositely rolling rollers 7, the oppositely rolling rollers 7 will have a tensile force of rolling the printed plastic layer 3 into the oppositely rolling rollers 7. When the detecting device 8 detects that the longitudinal deviation appears between the embossed pattern 712 on the embossing roller 71 and the corresponding pattern 32 on the printed plastic layer 3, the control device 10 controls the tension controller 41 to adjust the tension of the printed plastic layer 3 between the second feeding device 4 and the oppositely rolling rollers 7 according to the longitudinal deviation, so as to adjust the stretching length of the printed plastic layer 3 before rolling, thereby decreasing the longitudinal deviation in the subsequent rolling until the embossed pattern 712 on the embossing roller 71 is in register with the corresponding pattern 32 on the printed plastic layer 3 during rolling. Thus, the embossing hot-rolled on the transparent plastic layer 1 is longitudinally in register with the corresponding pattern 32 on the printed plastic layer 3. Optionally, the detecting device 8 comprises a first sensor 81 for detecting a position of the preset part 31 in each unit pattern on the printed plastic layer 3 and a second sensor 82 for detecting the position of the corresponding part 711 on the embossing roller 71 corresponding to the preset part 31. The control device 10 uses a distance difference or a time difference of signals detected by the two sensors 81 and 82 as the longitudinal deviation of the embossing in the rolling step to control the tension of the printed plastic layer 3 between the second feeding device 4 and the oppositely rolling rollers 7, so as to adjust the stretching length of the printed plastic layer 3 before rolling, so that the longitudinal deviation in the subsequent rolling is reduced until the embossed pattern 712 is in register with the corresponding pattern 32 on the printed plastic layer 3 during rolling. Thus, the embossing hot-rolled on the transparent plastic layer 1 is longitudinally in register with the corresponding pattern 32 of the printed plastic layer 3. Optionally, the first sensor 81 is a color mark sensor or an image sensor, the second sensor 82 is a position sensor, a displacement sensor, or a rotation speed sensor, and a magnetic powder brake is adopted as the tension controller 41 and is disposed on a feeding axle 42 of the second feeding device 4.

The preset part 31 is preferably a partial pattern of a certain part on each unit pattern of the printed plastic layer 3 or is preferably a chromatic printing line (may either be a black chromatic line, or a color chromatic line in other colors) at the side of the printed plastic layer 3. A color mark sensor is adopted as the first sensor 81, the corresponding part 711 is a magnetic block disposed at an end face of the embossing roller 71, and a Hall sensor is adopted as the second sensor 82. The embossed pattern 712 on the embossing roller 71 corresponding to the magnetic block corresponds to the pattern 32 on the printed plastic layer 3 corresponding to the preset part 31.

In the lateral direction, the width of the printed plastic layer 3 changes little after the stretching, and the deviation of the embossing in the width direction is hard to be visually noticed and can be neglected. Optionally, the width of the embossed pattern 712 on the outer circle of the embossing roller 71 is 0.95-1 times of the width of the unit pattern on the printed plastic layer 3 before stretching. To prevent the printed plastic layer 3 from deviation during feeding, a lateral rectification device 9 may be disposed. The lateral rectification device 9 includes a third sensor 91 for detecting a lateral deviation of the unit pattern on the printed plastic layer 3 and a lateral transmission gear 92 for making the second feeding device 4 move along the lateral direction. The control device 10 controls the lateral transmission gear 92 according to the lateral deviation of the unit pattern on the plastic layer 3 detected by the third sensor 91, so as to make the second feeding device 4 move along the lateral direction correspondingly, so that the pattern 32 on the printed plastic layer 3 is in register with the embossed pattern 712 around the outer circle of the embossing roller 71 on the lateral direction. During practical application, a third feeding device 14 for feeding a plastic base layer 5 in the oppositely rolling rollers 7 may also be additionally disposed. The plastic base layer 5 is adjacent to the backing roller 72 and is hot-rolled on the other side of the printed plastic layer 3 opposite to the transparent plastic layer 1 by the embossing roller 71 and the backing roller 72.

The long decorative material 13 with the embossing in register with the pattern manufactured using the foregoing rolling method comprises the transparent plastic layer 1 and the printed plastic layer 3. The embossing hot-rolled on the transparent plastic layer 1 is in register with the pattern 32 on the printed plastic layer 3. Optionally, the long decorative material 13 further comprises a plastic base layer 5 hot-rolled below the printed plastic layer 3.

The transparent plastic layer, the printed plastic layer, and the plastic base layer according to the foregoing solutions of the present invention refer to a PVC material layer, and certainly, may also refer to other thermoplastic layer with stretchability or other materials having similar functions.

## Claims

1. A rolling method for a long decorative material with an embossing in register with a pattern, comprising:
a feeding step of feeding a layered raw material of the long decorative material (13) via a first feeding device (2) and a second feeding device (4) to be rolled into oppositely rolling rollers (7), the layered raw material comprising a transparent plastic layer (1) being fed via the first feeding device (2) and a printed plastic layer (3) printed with continuous unit patterns being fed via the second feeding device (4); and
a rolling step of hot rolling an embossing on the transparent plastic layer (1);
wherein in the feeding step, the transparent plastic layer (1) is located at one side of the printed plastic layer (3) where the continuous unit patterns are printed, the transparent plastic layer (1) is adjacent to an embossing roller (71) of the oppositely rolling rollers (7), and an embossed pattern (712) disposed around an outer circle of the embossing roller (71) corresponds to a pattern (32) of one unit pattern on the printed plastic layer (3),
wherein a longitudinal deviation of the embossing is adjusted in the rolling step by an adjusting step, the adjusting step comprises detecting the longitudinal deviation downstream of the second feeding device (4) and upstream of the oppositely rolling rollers (7) between the embossed pattern (712) on the embossing roller (71) and the corresponding pattern (32) on the printed plastic layer (3), wherein the adjusting step includes adjusting a feeding tension of the printed plastic layer (3) according to the longitudinal deviation via a tension controller (41) disposed on the second feeding device (4), so as to adjust a stretching length of the printed plastic layer (3) before rolling, so that the longitudinal deviation in subsequent rolling is reduced until the embossed pattern (712) is in register with the corresponding pattern (32) on the printed plastic layer (3) during rolling, and the embossing hot-rolled on the transparent plastic layer (1) is longitudinally in register with the corresponding pattern (32) on the printed plastic layer (3),
and wherein during the process of adjusting the longitudinal deviation of the embossing in the rolling step, a lateral deviation of the pattern is further adjusted, and when a lateral deviation is detected to be existing between the pattern (32) on the printed plastic layer (3) and the embossed pattern (712) on the embossing roller (71), the printed plastic layer (3) or the embossing roller (71) is moved along a lateral direction, so that the pattern (32) on the printed plastic layer (3) is in register with the embossed pattern (712) around the outer circle of the embossing roller (71) on the lateral direction.

2. The rolling method for the long decorative material according to claim 1, wherein the adjusting step comprises detecting a position of a preset part (31) on each unit pattern of the printed plastic layer (3) and detecting a position of a corresponding part (711) on the embossing roller (71) corresponding to the preset part (31) at the same time; when the preset part (31) is detected to be ahead of the corresponding part (711), increase the feeding tension of the printed plastic layer (3) to increase the stretching length of the printed plastic layer (3) before rolling, so as to reduce an ahead value of the preset part (31) in subsequent rolling until a deviation between the preset part (31) and the corresponding part (711) is zero, so that the embossing hot-rolled on the transparent plastic layer (1) is longitudinally in register with the pattern (32) on the printed plastic layer (3); and when the preset part (31) is detected to be lagging behind the corresponding part (711), decrease the feeding tension of the printed plastic layer (3) to decrease the stretching length of the printed plastic layer (3) before rolling, so as to increase a lagged value of the preset part (31) in the subsequent rolling until the deviation between the preset part (31) and the corresponding part (711) is zero, so that the embossing hot-rolled on the transparent plastic layer (1) is longitudinally in register with the corresponding pattern (32) on the printed plastic layer (3).

3. The rolling method for the long decorative material according to claim 1, wherein a spread length of the embossing pattern (712) disposed around the outer circle of the embossing roller (71) is 1.01 to 1.5 times of a length (a) of one unit pattern on the printed plastic layer (3) before stretching; and a heating temperature in the rolling step ranges from 85°C to 250°C.

4. The rolling method for the long decorative material according to claim 1, wherein in the rolling step, the longitudinal deviation of the embossing is measured by a distance difference or a time difference between a detected preset part (31) on each unit pattern of the printed plastic layer (3) and a detected corresponding part (711) on the embossing roller (71) corresponding to the preset part (31).

5. The rolling method for the long decorative material according to claim 4, wherein the layered raw material of the long decorative material to be rolled further comprises a plastic base layer (5), the plastic base layer (5) is delivered to the oppositely rolling rollers (7) simultaneously in the feeding step, and the plastic base layer (5) is located at the other side of the printed plastic layer (3) opposite to the side printed with the continuous unit patterns.

6. A rolling device for implementing the rolling method for the long decorative material (13) according to claims 1, 2, 3, or 4, comprising:
a first feeding device (2) for carrying a transparent plastic layer (1) of the long decorative material (13),
a second feeding device (4) for carrying a printed plastic layer (3) of the long decorative material (13),
oppositely rolling rollers (7) including an embossing roller (71) and a backing roller (72) for the long decorative material (13) to enter therebetween, wherein the transparent plastic layer (1) enters the oppositely rolling rollers (7) from the first feeding device (2) and the printed plastic layer (3) enters the oppositely rolling rollers (7) from the second feeding device(4); the transparent plastic layer (1) being located at the side of the printed plastic layer (3) where the continuous unit patterns are printed, wherein the transparent plastic layer (1) being adjacent to the embossing roller (71);
a detecting device (8) for detecting a longitudinal deviation between an embossed pattern (712) on the embossing roller (71) and a corresponding pattern (32) on the printed plastic layer (3) during rolling,
and a control device (10) for controlling the first feeding device (2), the second feeding device (4) and the oppositely rolling rollers (7);
wherein the detecting device (8) is positioned between the second feeding device (4) and the oppositely rolling rollers (7), wherein the rolling device further comprises
a tension controller (41) disposed on the second feeding device (4); such that when the detecting device (8) detects longitudinal deviation between the embossed pattern (712) on the embossing roller (71) and the corresponding pattern (32) on the printed plastic layer (3), the control device (10) is adapted to control the tension controller (41) so as to adjust the tension and stretching length of the printed plastic layer (3) between the second feeding device (4) and the oppositely rolling rollers (7) according to the longitudinal deviation, before rolling, so that the longitudinal deviation in subsequent rolling is reduced until the embossed pattern (712) is in register with the corresponding pattern (32) on the printed plastic layer (3) during rolling, and the embossing hot-rolled on the transparent plastic layer (1) is longitudinally in register with the corresponding pattern (32) on the printed plastic layer (3),
and wherein the rolling device further comprises a lateral rectification device (9), wherein the lateral rectification device (9) comprises a third sensor (91) for detecting a lateral deviation of the unit pattern on the printed plastic layer (3) and a lateral transmission gear (92) for making the second feeding device (4) move along a lateral direction, and the control device (10) controls the lateral transmission gear (92) according to the lateral deviation of the unit pattern on the printed plastic layer (3) detected by the third sensor (91), so as to make the second feeding device (4) move along the lateral direction correspondingly, so that the pattern (32) on the printed plastic layer (3) is in register with the embossed pattern (712) around the outer circle of the embossing roller (71) on the lateral direction.

7. The rolling device according to claim 6, wherein the control device (10) controls a heating temperature to be between 85°C and 250°C through controlling a hot medium flowing into the oppositely rolling rollers (7); and a spread length of the embossed pattern (712) disposed around the outer circle of the embossing roller (71) is 1.01 to 1.5 times of a length (a) of one unit pattern on the printed plastic layer (3) before stretching.

8. The rolling device according to claim 6, wherein the detecting device (8) comprises a first sensor (81) for detecting a position of a preset part (31) in each unit pattern on the printed plastic layer (3) and a second sensor (82) for detecting a position of a corresponding part (711) on the embossing roller (71) corresponding to the preset part (31), the control device (10) uses a distance difference or a time difference of signals detected by the two sensors (81, 82) as the longitudinal deviation of the embossing in the rolling step to control the tension of the printed plastic layer between the second feeding device (4) and the oppositely rolling rollers (7), so as to adjust the stretching length of the printed plastic layer (3) before rolling.

9. The rolling device according to claim 8, wherein the first sensor (81) is a color mark sensor or an image sensor, and the second sensor (82) is a position sensor, a displacement sensor, or a rotation speed sensor.

10. The rolling device according to any one of claims 6 to 9, a magnetic powder brake is adopted as the tension controller (41) and is disposed on a feeding axle (42) of the second feeding device (4).

11. The rolling device according to any one of claims 6 to 9, further comprising a third feeding device (14) for feeding a plastic base layer (5) in the oppositely rolling rollers (7), wherein the plastic base layer (5) is adjacent to the backing roller (72) and is hot-rolled on the other side of the printed plastic layer (3) opposite to the transparent plastic layer (1) by the embossing roller (71) and the backing roller (72).

## Patentansprüche

1. Walzverfahren für ein langgestrecktes mit einer mustersynchronen Prägung versehenes Dekormaterial, das Folgendes umfasst:
einen Zuführschritt des Zuführens eines mehrschichtigen Ausgangsstoffs, bestehend aus dem langgestreckten Dekormaterial (13), über eine erste Zuführvorrichtung (2) und eine zweite Zuführvorrichtung (4), um in gegenläufig walzenden Walzen (7) gewalzt zu werden; wobei der mehrschichtige Ausgangsstoff eine transparente Kunststoffschicht (1), die über die erste Zuführvorrichtung (2) zugeführt wird, und eine bedruckte Kunststoffschicht (3) umfasst, die mit durchgehenden Einheitsmustern bedruckt ist und über die zweite Zuführvorrichtung (4) zugeführt wird; und
einen Walzschritt des Heißwalzens einer Prägung auf die transparente Kunststoffschicht (1);
wobei während des Zuführschritts die transparente Kunststoffschicht (1) sich auf einer Seite der bedruckten Kunststoffschicht (3) befindet, auf der die durchgehenden Einheitsmuster aufgedruckt sind; wobei die transparente Kunststoffschicht (1) an eine Prägewalze (71) der gegenläufig walzenden Walzen (7) angrenzt; und wobei ein geprägtes Muster (712), das um einen äußeren Kreis der Prägewalze (71) aufgebracht ist, einem Muster (32) eines einheitlichen Musters auf der bedruckten Kunststoffschicht (3) entspricht;
wobei eine Längsabweichung der Prägung während des Walzschritts mittels eines Anpassungsschritts angepasst wird; wobei der Anpassungsschritt das Detektieren der Längsabweichung stromabwärts der zweiten Zuführvorrichtung (4) und stromaufwärts der gegenläufig walzenden Walzen (7) zwischen dem geprägten Muster (712) auf der Prägewalze (71) und dem entsprechenden Muster (32) auf der bedruckten Kunststoffschicht (3) umfasst;
wobei der Anpassungsschritt das Anpassen einer Zuführspannung der bedruckten Kunststoffschicht (3) in Abhängigkeit von der Längsabweichung mittels einer Spannungsregelvorrichtung (41) einschließt, die auf der zweiten Zuführvorrichtung (4) aufgebracht ist, um eine Strecklänge der bedruckten Kunststoffschicht (3) vor den Walzen derart anzupassen, dass die Längsabweichung während des anschließenden Walzens wie folgt reduziert wird, bis das geprägte Muster (712) mit dem entsprechenden Muster (32) auf der bedruckten Kunststoffschicht (3) während des Walzens synchron ist, und bis die heißgewalzte Prägung auf die transparente Kunststoffschicht (1) in Längsrichtung mit dem entsprechenden Muster (32) auf der bedruckten Kunststoffschicht (3) synchron ist;
und wobei während des Anpassungsprozesses der Längsabweichung der Prägung in dem Walzschritt ferner eine seitliche Abweichung des Musters angepasst wird; und
wobei, wenn das Vorhandensein einer seitlichen Abweichung zwischen dem Muster (32) auf der bedruckten Kunststoffschicht (3) und dem geprägten Muster (712) auf der Prägewalze (71) detektiert wird, die bedruckte Kunststoffschicht (3) oder die Prägewalze (71) in seitlicher Richtung derart verschoben wird, dass das Muster (32) auf der bedruckten Kunststoffschicht (3) in seitlicher Richtung mit dem geprägten Muster (712) um den Außenkreis der Prägewalze (71) herum synchron ist.

2. Walzverfahren für das langgestreckte Dekormaterial nach Anspruch 1, wobei der Anpassungsschritt das Detektieren einer Position eines vorbestimmten Abschnitts (31) auf jedem Einheitsmuster der bedruckten Kunststoffschicht (3) und das gleichzeitige Detektieren einer Position eines entsprechenden Abschnitts (711) auf der Prägewalze (71) umfasst, der dem vorbestimmten Abschnitt (31) entspricht; wenn detektiert wird, dass der vorbestimmte Abschnitt (31) sich vor dem entsprechenden Abschnitt (711) befindet, die Zuführspannung der bedruckten Kunststoffschicht (3) erhöht wird, um die Strecklänge der bedruckten Kunststoffschicht (3) vor den Walzen zu vergrößern, sodass ein Vorschubwert des vorbestimmten Abschnitts (31) während des folgenden Walzens reduziert wird, bis eine Abweichung zwischen dem vorbestimmten Abschnitt (31) und dem entsprechenden Abschnitt (711) gleich Null ist, sodass die auf die transparente Kunststoffschicht (1) heißgewalzte Prägung in Längsrichtung mit dem Muster (32) auf der bedruckten Kunststoffschicht (3) synchron ist; und wenn detektiert wird, dass der vorbestimmte Abschnitt (31) hinter dem entsprechenden Abschnitt (711) zurückbleibt, die Zuführspannung der bedruckten Kunststoffschicht (3) reduziert wird, um die Strecklänge der bedruckten Kunststoffschicht (3) vor den Walzen zu reduzieren, sodass ein verzögerter Wert des vorbestimmten Abschnitts (31) während des folgenden Walzens erhöht wird, bis die Abweichung zwischen dem vorbestimmten Abschnitt (31) und dem entsprechenden Abschnitt (711) gleich Null ist, sodass die auf die transparente Kunststoffschicht (1) heißgewalzte Prägung in Längsrichtung mit dem entsprechenden Muster (32) auf der bedruckten Kunststoffschicht (3) synchron ist.

3. Walzverfahren für das langgestreckte Dekormaterial nach Anspruch 1, wobei eine Strecklänge des um den Außenkreis der Prägewalze (71) aufgebrachten Prägemusters (712) das 1,01- bis 1,5-fache einer Länge (a) eines Einheitsmusters auf der bedruckten Kunststoffschicht (3) vor dem Strecken beträgt; wobei eine Erwärmungstemperatur in dem Walzschritt in dem Bereich von 85 °C bis 250 °C liegt.

4. Walzverfahren für das langgestreckte Dekormaterial nach Anspruch 1, wobei während des Walzschritts die Längsabweichung der Prägung anhand einer Abstandsdifferenz oder einer Zeitdifferenz zwischen einem detektierten vorbestimmten Abschnitt (31) auf jedem Einheitsmuster der bedruckten Kunststoffschicht (3) und einem entsprechenden detektierten Abschnitt (711) auf der Prägewalze (71) gemessen wird, der dem vorbestimmten Abschnitt (31) entspricht.

5. Walzverfahren für das langgestreckte Dekormaterial nach Anspruch 4, wobei der mehrschichtige Ausgangsstoff des zu walzenden langgestreckten Dekormaterials ferner eine Kunststoffbasisschicht (5) umfasst; wobei die Kunststoffbasisschicht (5) während des Zuführschritts gleichzeitig auf die gegenläufig walzenden Walzen (7) aufgebracht wird; und wobei die Kunststoffbasisschicht (5) sich auf der anderen Seite der bedruckten Kunststoffschicht (3) befindet, gegenüber der Seite, die mit den durchgehenden Einheitsmustern bedruckt ist.

6. Walzvorrichtung zur Durchführung des Walzverfahrens für das langgestreckte Dekormaterial (13) nach Anspruch 1, 2, 3 oder 4, die Folgendes umfasst:
eine erste Zuführvorrichtung (2), die dazu bestimmt ist, eine transparente Kunststoffschicht (1) des langgestreckten Dekormaterials (13) zu transportieren;
eine zweite Zuführvorrichtung (4), die dazu bestimmt ist, eine bedruckte Kunststoffschicht (3) des langgestreckten Dekormaterials (13) zu transportieren;
gegenläufig walzende Walzen (7), die eine Prägewalze (71) und eine Stützwalze (72) enthalten, damit das langgestreckte Dekormaterial (13) in diese beiden Walzen eingefügt werden kann; wobei die transparente Kunststoffschicht (1) von der ersten Zuführvorrichtung (2) aus in die gegenläufig walzenden Walzen (7) eindringt und die bedruckte Kunststoffschicht (3) von der zweiten Zuführvorrichtung (4) aus in die gegenläufig walzenden Walzen (7) eindringt; wobei die transparente Kunststoffschicht (1) auf der Seite der bedruckten Kunststoffschicht (3) liegt, auf der die durchgehenden Einheitsmuster aufgedruckt sind; wobei die transparente Kunststoffschicht (1) an die Prägewalze (71) angrenzt;
eine Detektiervorrichtung (8), die dazu bestimmt ist, während des Walzens eine Längsabweichung zwischen einem geprägten Muster (712) auf der Prägewalze (71) und einem entsprechenden Muster (32) auf der bedruckten Kunststoffschicht (3) zu detektieren;
und eine Regelvorrichtung (10), die dazu bestimmt ist, die erste Zuführvorrichtung (2), die zweite Zuführvorrichtung (4) sowie die gegenläufig walzenden Walzen (7) zu steuern;
wobei die Detektiervorrichtung (8) zwischen der zweiten Zuführvorrichtung (4) und den gegenläufig walzenden Walzen (7) liegt;
wobei die Walzvorrichtung ferner Folgendes umfasst:
eine Spannungsregelvorrichtung (41), die an der zweiten Zuführvorrichtung (4) derart angebracht ist, dass, wenn die Detektiervorrichtung (8) eine Längsabweichung zwischen dem geprägten Muster (712) auf der Prägewalze (71) und dem entsprechenden Muster (32) auf der bedruckten Kunststoffschicht (3) detektiert, die Regelvorrichtung (10) derart ausgelegt ist, dass sie die Spannungsregelvorrichtung (41) steuert, um die Spannung und die Strecklänge der bedruckten Kunststoffschicht (3) zwischen der zweiten Zuführvorrichtung (4) und den gegenläufig walzenden Walzen (7) in Abhängigkeit von der Längsabweichung vor dem Walzen derart anzupassen, dass die Längsabweichung während des anschließenden Walzvorgangs so weit reduziert wird, bis das geprägte Muster (712) während des Walzens mit dem entsprechenden Muster (32) auf der bedruckten Kunststoffschicht (3) synchron ist und bis die auf die transparente Kunststoffschicht (1) heißgewalzte Prägung in Längsrichtung mit dem entsprechenden Muster (32) auf der bedruckten Kunststoffschicht (3) synchron ist;
und wobei die Walzvorrichtung ferner eine laterale Berichtigungsvorrichtung (9) umfasst; wobei die laterale Berichtigungsvorrichtung (9) einen dritten Sensor (91), der dazu bestimmt ist, eine seitliche Abweichung des Einheitsmusters auf der bedruckten Kunststoffschicht (3) zu detektieren, sowie ein laterales Getriebezahnrad (92) umfasst, das die Bewegung der zweiten Zuführvorrichtung (4) in seitlicher Richtung ermöglicht; und wobei die Regelvorrichtung (10) das laterale Getriebezahnrad (92) in Abhängigkeit von der seitlichen Abweichung des Einheitsmusters auf der bedruckten Kunststoffschicht (3) steuert, die durch den dritten Sensor (91) detektiert wurde, um die Bewegung der zweiten Zuführvorrichtung (4) entsprechend in seitlicher Richtung zu ermöglichen, und zwar derart, dass das Muster (32) auf der bedruckten Kunststoffschicht (3) in seitlicher Richtung mit dem geprägten Muster (712) um den Außenkreis der Prägewalze (71) herum synchron ist.

7. Walzvorrichtung nach Anspruch 6, wobei die Regelvorrichtung (10) über einer Regelung eines Heizmediums, das durch die gegenläufig walzenden Walzen (7) strömt, eine Heiztemperatur, die zwischen 85 °C und 250 °C liegt, sowie eine Strecklänge des um den Außenkreis der Prägewalze (71) aufgebrachten geprägten Musters (712), die 1,01- bis 1,5-fache einer Länge (a) eines Einheitsmusters auf der bedruckten Kunststoffschicht (3) vor dem Strecken darstellt, regelt.

8. Walzvorrichtung nach Anspruch 6, wobei die Detektiervorrichtung (8) einen ersten Sensor (81) umfasst, der dazu bestimmt ist, eine Position eines vorbestimmten Abschnitts (31) in jedem Einheitsmuster auf der bedruckten Kunststoffschicht (3) zu detektieren, sowie einen zweiten Sensor (82) umfasst, der dazu bestimmt ist, eine Position eines entsprechenden Abschnitts (711) auf der Prägewalze (71) zu detektieren, der dem vorbestimmten Abschnitt (31) entspricht; wobei die Regelvorrichtung (10) eine Abstandsdifferenz oder eine Zeitdifferenz von Signalen, die von den beiden Sensoren (81, 82) detektiert werden, als Längsabweichung der Prägung während des Schritts der Prägung nutzt, um die Spannung der bedruckten Kunststoffschicht zwischen der zweiten Zuführvorrichtung (4) und den gegenläufig walzenden Walzen (7) derart zu regeln, dass die Strecklänge der bedruckten Kunststoffschicht (3) vor dem Walzen angepasst wird.

9. Walzvorrichtung nach Anspruch 8, wobei der erste Sensor (81) ein Farbsensor oder ein Bildsensor darstellt und der zweite Sensor (82) ein Positionssensor, ein Wegsensor oder ein Drehgeschwindigkeitssensor darstellt.

10. Walzvorrichtung nach einem der Ansprüche 6 bis 9, wobei eine Magnetpulverbremse als Spannungsregelvorrichtung (41) ausgewählt wird, die an einer Zuführwelle (42) der zweiten Zuführvorrichtung (4) aufgebracht ist.

11. Walzvorrichtung nach einem der Ansprüche 6 bis 9, die ferner eine dritte Zuführvorrichtung (14) umfasst, die dazu bestimmt ist, eine Kunststoffbasisschicht (5) in die gegenläufig rotierenden Walzen (7) einzuführen; wobei die Kunststoffbasisschicht (5) an die Stützwalze (72) angrenzt, und mittels der Prägewalze (71) und der Stützwalze (72) auf die gegenüberliegende Seite der bedruckten Kunststoffschicht (3) heißaufgewalzt wird.

## Revendications

1. Procédé de laminage pour un long matériau décoratif doté d'un gaufrage en registre avec un motif, qui comprend :
une étape d'alimentation destinée à l'alimentation d'une matière première multicouche constituée du long matériau décoratif (13) par l'intermédiaire d'un premier dispositif d'alimentation (2) et d'un deuxième dispositif d'alimentation (4) pour le laminage de ladite matière première entre des rouleaux tournant en sens inverse (7) ; dans lequel la matière première multicouche comprend une couche de matière plastique transparente (1) qui est alimentée par l'intermédiaire du premier dispositif d'alimentation (2) et une couche de matière plastique imprimée (3) qui est imprimée avec des motifs unitaires continus, qui est alimentée par l'intermédiaire du deuxième dispositif d'alimentation (4) ; et
une étape de laminage constituée d'un laminage à chaud d'un gaufrage sur la couche de matière plastique transparente (1) ;
dans lequel, au cours de l'étape d'alimentation, la couche de matière plastique transparente (1) est située sur un côté de la couche de matière plastique imprimée (3) sur lequel les motifs unitaires continus sont imprimés ; dans lequel la couche de matière plastique transparente (1) est adjacent à un rouleau de gaufrage (71) parmi les rouleaux tournant en sens inverse (7) ; et un motif gaufré (712), qui est disposé autour d'un cercle externe du rouleau de gaufrage (71), correspond à un motif (32) dudit un motif unitaire sur la couche de matière plastique imprimée (3) ;
dans lequel une déviation longitudinale du gaufrage est ajustée au cours de l'étape de laminage par l'intermédiaire d'une étape d'ajustement ; dans lequel l'étape d'ajustement comprend le fait de détecter la déviation longitudinale en aval du deuxième dispositif d'alimentation (4) et en amont des rouleaux tournant en sens inverse (7) entre le motif gaufré (712) sur le rouleau de gaufrage (71) et le motif correspondant (32) sur la couche de matière plastique imprimée (3) ;
dans lequel l'étape d'ajustement englobe le fait d'ajuster une tension d'alimentation de la couche de matière plastique imprimée (3) en fonction de la déviation longitudinale par l'intermédiaire d'un dispositif de réglage de la tension (41) qui est disposé sur le deuxième dispositif d'alimentation (4), de façon à ajuster une longueur d'étirage de la couche de matière plastique imprimée (3) avant le laminage, d'une manière telle que la déviation longitudinale au cours du laminage qui s'ensuit est réduite jusqu'à ce que le motif gaufré (712) soit mis en registre avec le motif correspondant (32) sur la couche de matière plastique imprimée (3) au cours du laminage, d'une manière telle que le gaufrage qui a été appliqué par laminage à chaud sur la couche de matière plastique transparente (1) est mis, dans la direction longitudinale, en registre avec le motif correspondant (32) sur la couche de matière plastique imprimée (3) ;
et dans lequel, au cours du processus d'ajustement de la déviation longitudinale du gaufrage au cours de l'étape de laminage, on ajuste en outre une déviation latérale du motif ; et dans lequel lorsque l'on détecte la présence d'une déviation latérale entre le motif (32) sur la couche de matière plastique imprimée (3) et le motif gaufré (712) sur le rouleau de gaufrage (71), on déplace la couche de matière plastique imprimée (3) ou le rouleau de gaufrage (71) dans une direction latérale, d'une manière telle que le motif (32) sur la couche de matière plastique imprimée (3) est mis en registre avec le motif gaufré (712) autour du cercle externe du rouleau de gaufrage (71) dans la direction latérale.

2. Procédé de laminage pour le long matériau décoratif selon la revendication 1, dans lequel l'étape d'ajustement comprend la détection d'une position d'une partie prédéterminée (31) sur chaque motif unitaire de la couche de matière plastique imprimée (3) et la détection d'une position d'une partie correspondante (711) sur le rouleau de gaufrage (71) qui correspond à la partie prédéterminée (31), de manière simultanée ; dans lequel, lorsque l'on détecte que la partie prédéterminée (31) se trouve en avant de la partie correspondante (711), on augmente la tension d'alimentation de la couche de matière plastique imprimée (3) afin d'augmenter la longueur d'étirage de la couche de matière plastique imprimée (3) avant le laminage, tant et si bien que l'on diminue une valeur d'avance de la partie prédéterminée (31) au cours du laminage qui s'ensuit jusqu'à ce qu'une déviation entre la partie prédéterminée (31) et la partie correspondante (711) soit égale à zéro, d'une manière telle que le gaufrage qui a été appliqué par laminage à chaud sur la couche de matière plastique transparente (1) est mis, dans la direction longitudinale, en registre avec le motif (32) sur la couche de matière plastique imprimée (3) ; et dans lequel lorsque l'on détecte que la partie prédéterminée (31) est en retard derrière la partie correspondante (711), on diminue la tension d'alimentation de la couche de matière plastique imprimée (3) afin de réduire la longueur d'étirage de la couche de matière plastique imprimée (3) avant le laminage, tant et si bien que l'on augmente une valeur retardée de la partie prédéterminée (31) au cours du laminage qui s'ensuit, jusqu'à ce que la déviation entre la partie prédéterminée (31) et la partie correspondante (711) soit égale à zéro, d'une manière telle que le gaufrage qui a été appliqué par laminage à chaud sur la couche de matière plastique transparente (1) est mis, dans la direction longitudinale, en registre avec le motif correspondant (32) sur la couche de matière plastique imprimée (3).

3. Procédé de laminage pour le long matériau décoratif selon la revendication 1, dans lequel une longueur d'étendue du motif de gaufrage (712) disposé autour du cercle externe du rouleau de gaufrage (71) représente de 1,01 à 1,5 fois une longueur (a) dudit un motif unitaire sur la couche de matière plastique imprimée (3) avant l'étirage ; et dans lequel une température de chauffage au cours de l'étape de laminage se situe dans la plage allant de 85°C à 250 °C.

4. Procédé de laminage pour le long matériau décoratif selon la revendication 1, dans lequel, au cours de l'étape de laminage, la déviation longitudinale du gaufrage est mesurée par une différence de distance ou une différence de durée entre une partie prédéterminée détectée (31) sur chaque motif unitaire de la couche de matière plastique imprimée (3) et une partie correspondante détectée (711) sur le rouleau de gaufrage (71), qui correspond à la partie prédéterminée (31).

5. Procédé de laminage pour le long matériau décoratif selon la revendication 4, dans lequel la matière première multicouche du long matériau décoratif qui doit faire l'objet d'un laminage comprend en outre une couche de base en matière plastique (5) ; dans lequel la couche de base en matière plastique (5) est appliquée sur les rouleaux tournant en sens inverse (7) de manière simultanée au cours de l'étape d'alimentation ; et dans lequel la couche de base en matière plastique (5) est située sur l'autre côté de la couche de matière plastique imprimée (3) à l'opposé du côté qui est imprimé avec les motifs unitaires continus.

6. Dispositif de laminage destiné à la mise en œuvre du procédé de laminage pour le long matériau décoratif (13) en conformité avec la revendication 1, 2, 3 ou 4, qui comprend :
un premier dispositif d'alimentation (2) qui est destiné à transporter une couche de matière plastique transparente (1) du long matériau décoratif (13) ;
un deuxième dispositif d'alimentation (4) qui est destiné à transporter une couche de matière plastique imprimée (3) du long matériau décoratif (13) ;
des rouleaux tournant en sens inverse (7) qui englobent un rouleau de gaufrage (71) et un rouleau de soutien (72) pour permettre au long matériau décoratif (13) de venir s'insérer entre les deux ; dans lequel la couche de matière plastique transparente (1) pénètre entre les rouleaux tournant en sens inverse (7) à partir du premier dispositif d'alimentation (2) et la couche de matière plastique imprimée (3) pénètre entre les rouleaux tournant en sens inverse (7) à partir du deuxième dispositif d'alimentation (4) ; dans lequel la couche de matière plastique transparente (1) est située du côté de la couche de matière plastique imprimée (3) sur lequel les motifs unitaires continus sont imprimés ; dans lequel la couche de matière plastique transparente (1) est adjacente au rouleau de gaufrage (71) ;
un dispositif de détection (8) qui est destiné à détecter une déviation longitudinale entre un motif gaufré (712) sur le rouleau de gaufrage (71) et un motif correspondant (32) sur la couche de matière plastique imprimée (3) au cours du laminage ;
et un dispositif de commande (10) qui est destiné à commander le premier dispositif d'alimentation (2), le deuxième dispositif d'alimentation (4), ainsi que les rouleaux tournant en sens inverse (7) ;
dans lequel le dispositif de détection (8) est situé entre le deuxième dispositif d'alimentation (4) et les rouleaux tournant en sens inverse (7) ;
dans lequel le dispositif de laminage comprend :
un dispositif de réglage de la tension (41) qui est disposé sur le deuxième dispositif d'alimentation (4) d'une manière telle que, lorsque le dispositif de détection (8) détecte une déviation longitudinale entre le motif gaufré (712) sur le rouleau de gaufrage (71) et le motif correspondant (32) sur la couche de matière plastique imprimée (3), le dispositif de commande (10) est conçu pour commander le dispositif de réglage de la tension (41) de façon à ajuster la tension et la longueur d'étirage de la couche de matière plastique imprimée (3) entre le deuxième dispositif d'alimentation (4) et les rouleaux tournant en sens inverse (7) en fonction de la déviation longitudinale, avant le laminage, d'une manière telle que la déviation longitudinale, au cours du laminage qui s'ensuit, est réduite jusqu'à ce que le motif gaufré (712) soit mis en registre avec le motif correspondant (32) sur la couche de matière plastique imprimée (3) au cours du laminage, d'une manière telle que le gaufrage qui a été appliqué par laminage à chaud sur la couche de matière plastique transparente (1) est mis, dans la direction longitudinale, en registre avec le motif correspondant (32) sur la couche de matière plastique imprimée (3) ;
et dans lequel le dispositif de laminage comprend en outre un dispositif de rectification latérale (9) ; dans lequel le dispositif de rectification latérale (9) comprend un troisième capteur (91) qui est destiné à détecter une déviation latérale du motif unitaire sur la couche de matière plastique imprimée (3) et un engrenage de transmission latérale (92) destiné à permettre le déplacement du deuxième dispositif d'alimentation (4) dans une direction latérale ; et dans lequel le dispositif de commande (10) commande l'engrenage de transmission latérale (92) en fonction de la déviation latérale du motif unitaire sur la couche de matière plastique imprimée (3), qui a été détectée par le troisième capteur (91), de façon à permettre le déplacement du deuxième dispositif d'alimentation (4) dans la direction latérale de manière correspondante, d'une manière telle que le motif (32) sur la couche de matière plastique imprimée (3) est mis en registre avec le motif gaufré (712) autour du cercle externe du rouleau de gaufrage (71) dans la direction latérale.

7. Dispositif de laminage selon la revendication 6, dans lequel le dispositif de commande (10) règle une température de chauffage pour qu'elle se situe entre 85 °C et 250 °C par l'intermédiaire d'un réglage d'un milieu chauffant qui s'écoule dans les rouleaux tournant en sens inverse (7) ; et dans lequel une longueur d'étirement du motif gaufré (712) disposé autour du cercle externe du rouleau de gaufrage (71) représente de 1,01 à 1,5 fois une longueur (a) dudit un motif unitaire sur la couche de matière plastique imprimée (3) avant l'étirage.

8. Dispositif de laminage selon la revendication 6, dans lequel le dispositif de détection (8) comprend un premier capteur (81) qui est destiné à détecter une position d'une partie prédéterminée (31) dans chaque motif unitaire sur la couche de matière plastique imprimée (3) et un deuxième capteur (82) qui est destiné à détecter une position d'une partie correspondante (711) sur le rouleau de gaufrage (71) qui correspond à la partie prédéterminée (31) ; dans lequel le dispositif de commande (10) utilise une différence de distance ou une différence de durée de signaux qui sont détectés par les deux capteurs (81, 82) à titre de déviation longitudinale du gaufrage au cours de l'étape de gaufrage dans le but de régler la tension de la couche de matière plastique imprimée entre le deuxième dispositif d'alimentation (4) et les rouleaux tournant en sens inverse (7), d'une manière telle que l'on ajuste la longueur d'étirage de la couche de matière plastique imprimée (3) avant le laminage.

9. Dispositif de laminage selon la revendication 8, dans lequel le premier capteur (81) représente un capteur d'une marque de couleur ou un capteur d'image, et le deuxième capteur (82) représente un capteur de la position, un capteur du déplacement ou un capteur de la vitesse de rotation.

10. Dispositif de laminage selon l'une quelconque des revendications 6 à 9, dans lequel on sélectionne un frein à poudre magnétique pour faire office de dispositif de réglage de la tension (41) qui est disposé sur un axe d'alimentation (42) du deuxième dispositif d'alimentation (4).

11. Dispositif de laminage selon l'une quelconque des revendications 6 à 9, qui comprend en outre un troisième dispositif d'alimentation (14) qui est destiné à alimenter une couche de base en matière plastique (5) dans les rouleaux tournant en sens inverse (7) ; dans lequel la couche de base en matière plastique (5) est située en position adjacente au rouleau de soutien (72) et est appliquée par gaufrage à chaud sur l'autre côté de la couche de matière plastique imprimée (3) opposé à la couche de matière plastique transparente (1), par l'intermédiaire du rouleau de gaufrage (71) et du rouleau de soutien (72).
